# EUROPEAN PATENT APPLICATION

(11) **EP 2 040 420 A1**
(43) Date of publication of application: **25.03.2009**
(21) Application number: 07018473.4
(22) Date of filing: 20.09.2007
(51) Int. Cl.: H04L 12/56

(54) **Method and device for shaping a stream of frames of user traffic, as well as computer network**

(71) Applicant: LUCENT TECHNOLOGIES INC., Murray Hill NJ 07974-0636 (US)
(72) Inventor: de Heer, Arjan, 7552 KJ Hengelo (NL)
(74) Representative: Kohler Schmid Möbus

(57) **Abstract**

A method for shaping a stream (5) of frames of user traffic for a service provider (3) transmitting user traffic up to a committed information rate (CIR) with assured delivery and transmitting user traffic exceeding the committed information rate (CIR) up to a peak information rate (PIR) with non-assured delivery comprises the steps of: depending upon a characteristic of each frame, assigning the frames of user traffic either to a first buffer (7) for frames to be transmitted with assured delivery or to a second buffer (8) for frames to be transmitted with non-assured delivery, delivering the frames of the first buffer (7) to the service provider (3) by emptying the first buffer (7) at a first rate (R1) corresponding at most to the committed information rate (CIR), and delivering the frames of the second buffer (8) to the service provider (3) by emptying the second buffer (8) at a second rate (R2), the sum of the first and the second rate (R1, R2) corresponding at most to the peak information rate (PIR), preferably being equal to the peak information rate (PIR).

## Description

### Background of the Invention

The invention relates to a method and to a device for shaping a stream of frames of user traffic for a service provider transmitting user traffic up to a committed information rate with assured delivery and transmitting user traffic exceeding the committed information rate up to a peak information rate with non-assured delivery, as well as to a computer network comprising at least one such device.

Transporting user traffic using Ethernet services is becoming more and more popular. The Metro Ethernet Forum (MEF) as well as ITU-T have defined several specifications describing them. One of the characteristics of these services is that they may support Service Level Agreements (SLAs) with Committed Information Rate (CIR) as well as Peak Information Rate (PIR) Parameters. The CIR indicates up to which amount the user of the service can transmit traffic such that the delivery is assured, the (larger) PIR indicates up to which amount the user can transmit traffic but for which the delivery is not assured.

The user sends the traffic to the provider and the provider runs a policing algorithm determining what traffic fits in the CIR part and what traffic fits in the PIR part. Such an algorithm is for example described in the MEF10 specification document e.g. available via "metroethernetforum.org". Consequently, it is the provider that determines what traffic is assured to be delivered and what traffic is not assured to be delivered. The user may transmit user data continuously at the line rate speed to the provider which is usually at or above the PIR rate. If the user is doing this the provider enforcing the agreed profile may drop a significant amount of traffic.

In order to improve on this the user could shape the traffic it sends to the provider, such that all the traffic it sends fits in the agreed upon profile. However, even in this case, although the user can buy an Ethernet service with a assured (CIR) and non-assured (PIR) part, the user does not determine what traffic is put in the assured part and what traffic is put in the non-assured part. As a result e.g. voice traffic may be put in the non-assured part, whereas file transfer traffic is put in the assured part, leading to a bad voice quality. If the assignment would have been the other way around the voice quality would have been good and the file transfer as well, since the latter can more easily cope with packet loss and the like.

Moreover, even if the user has shaped the traffic towards the provider to fit in the CIR/PIR profile this does not determine what type of traffic is put in the CIR and what type of traffic is put in the PIR part, since all the frames are still transmitted if there is an opportunity to transmit, regardless whether this opportunity is within the CIR (assured opportunity) or with in the PIR (non-assured opportunity) boundary. This means that all types of traffic have the same chance to get the assured or non-assured treatment, i.e. all types of traffic have the same chance of being dropped, whereas certain types of traffic would benefit form always being transferred in the assured part.

### Object of the Invention

It is the object of the invention to provide a method, a device and a computer network which allow frames of user data to be transmitted by a service provider with assured or non-assured delivery depending upon a characteristic of the frames.

### Summary of the Invention

This object is achieved by a method as described above, comprising the steps of: depending upon a characteristic of each frame, assigning the frames of user traffic either to a first buffer for frames to be transmitted with assured delivery or to a second buffer for frames to be transmitted with non-assured delivery, delivering the frames of the first buffer to the service provider by emptying the first buffer at a first rate corresponding at most to the committed information rate, and delivering the frames of the second buffer to the service provider by emptying the second buffer at a second rate, the sum of the first and the second rate corresponding at most to the peak information rate, preferably being equal to the peak information rate.

According to the invention, the frames of user traffic are divided into two groups based upon a characteristic of each frame, each group being assigned to a buffer. By buffering the frames, it can be ensured that frames to be transmitted with assured delivery can always be transmitted in the CIR part, as the rate at which the first buffer is emptied does not exceed the committed information rate. Moreover, by using the buffers the total rate of delivering the frames corresponds at most to the PIR even if the user traffic is delivered at a line rate exceeding the PIR. The proportion of the values of the first and of the second rate can be adjusted using an appropriate scheduling algorithm. In particular, in case that the first buffer does not contain enough frames to use up all of the CIR bandwidth, the remaining CIR can be used to empty the second buffer. Usually, in case that sufficient frames are available in the first and second buffers, the total rate, i.e. the sum of the first and second rate corresponds to the peak information rate.

In a highly preferred variant, frames from the buffers which are to be transmitted with assured delivery are marked with a first sign and frames from the buffers which are to be transmitted with non-assured delivery are marked with a second sign. In this case, the frames of user traffic are marked as either being part of the CIR (marked green) or the PIR (marked yellow) bandwidth, which is particularly useful when the service provider uses a so-called color aware policing function, as defined e.g. in the MEF 10 standard, i.e. a function that takes into account the marking as assigned by the customer.

In an improvement of this variant, in case that the first buffer is emptied at a first rate being lower than the committed information rate, part of the frames from the second buffer are marked with the first sign. In this case, it can be ensured that the CIR bandwidth is used up even if the first buffer does not contain sufficient frames for attaining the CIR.

In another preferred variant, the frames are assigned either to the first or to the second buffer in dependence of a characteristic value of a specific field within each frame, the specific field being indicative of a desired quality of service. The specific field may be one of the following: IP ToS (type of service) byte, IEEE 802.1 PCP field, or multi-protocol label switching experimental (MPLS EXP) bits etc.

A second aspect of the invention is implemented in a device for shaping a stream of frames of user traffic for a service provider transmitting user traffic up to a committed information rate with assured delivery and user traffic exceeding the committed information rate up to a peak information rate with non-assured delivery, the device comprising: a first buffer for frames to be transmitted with assured delivery, a second buffer for frames to be transmitted with non-assured delivery, a selector for assigning frames of user traffic to either the first or the second buffer in dependence of a characteristic of each frame, and a scheduler for delivering frames from the first buffer to the service provider by emptying the first buffer at a first rate corresponding at most to the committed information rate and for delivering frames from the second buffer to the service provider by emptying the second buffer at a second rate, the sum of the first and the second rate corresponding at most to the peak information rate, preferably being equal to the peak information rate. The device may be implemented as a stand-alone device, e.g. as an in-line device to be arranged in the Ethernet connection from a customer equipment to a provider network, or the device may be a computer system with a software module implementing the components as described above. In particular, the device may be implemented as an application-specific integrated circuit (ASIC).

In a preferred embodiment, the device comprises a marking unit for marking the frames from the buffers which are to be transmitted with assured delivery with a first sign and for marking the frames from the buffers which are to be transmitted with non-assured delivery with a second sign. The marking unit may add a mark to the frames, e.g. marking the frames which are to be transmitted with assured delivery "green" and the frames which are to be transmitted with non-assured delivery "yellow", in accordance with the procedure described in the MEF 10 specification.

In a highly preferred improvement, the marking unit marks part of the frames from the second buffer with the first sign in case that the first buffer is emptied at a first rate being lower than the committed information rate. In this case, the scheduler comprises two stages. In the first stage, the available CIR bandwidth is distributed between the first and second buffer, the second buffer being emptied only when the first buffer is empty. The second stage services the second buffer for the PIR bandwidth.

In a further preferred embodiment the selector assigns the frames either to the first or to the second buffer in dependence of a characteristic value of a specific field within each frame, the specific field being indicative of a desired quality of service. The quality of service may be determined by a specific field being provided in the frame for this purpose; however, a field indicating the type of traffic, e.g. voice traffic, file transfer traffic, etc. may be sufficient to make the selection, as the Quality of Service which is required for each type of these types of traffic is known.

A third aspect of the invention is implemented in a computer network comprising at least one device as described above, preferably being arranged at a demarcation point between a customer equipment and a provider network. The demarcation point is the ideal location for the traffic and profile-aware shaping device. It is understood that the traffic from a plurality of users may also be shaped in the way described above when the device is equipped with a plurality of selectors, schedulers and first and second buffers corresponding to the plurality of users which are connected to the provider network via the shaping device.

Preferably, the provider network is construed to transmit traffic with the first mark with assured delivery and to transmit traffic with the second mark with non-assured delivery. In this case, the provider network may be an Ethernet network which uses the marking function described in the MEF10 specification. It is understood that any other mechanism which is capable of performing the above function can be employed as well for this purpose.

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

### Short Description of the Drawings

The invention is shown in the drawing.
- **Fig. 1**: shows a schematic diagram of a first embodiment of a device according to the invention for shaping a stream of user traffic, and
- **Fig. 2**: shows a schematic diagram of a second embodiment of such a device comprising a marking unit.

### Detailed description of Preferred Embodiments

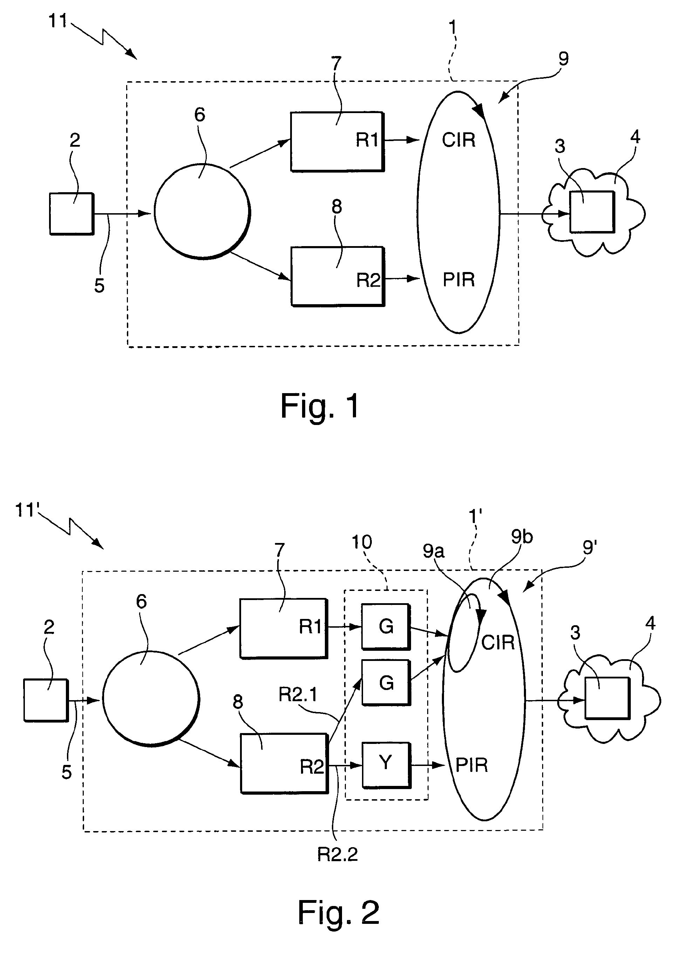

**Fig. 1** shows a device **1** located at a demarcation point between an end user equipment **2** and a service provider **3** of a provider network **4** (Ethernet). The demarcation point is located e.g. at the premises of the customer, e.g. in a DSL modem or the like. The device 1 is used for shaping a stream **5** of frames of user data for the service provider 3, which service provider 3 is construed to transmit frames of user traffic up to a committed information rate with assured delivery and to transmit user traffic exceeding the committed information rate with non-assured delivery, i.e. some of the data exceeding the committed information rate may be dropped during the transport to a destination of the user traffic inside of the provider network 4.

For the purpose of shaping the stream 5 of user data, the device 1 comprises a selector **6** for assigning individual frames from the stream 5 to either a first buffer **7** or a second buffer **8.** The frames of the first buffer 7 are to be transmitted in the assured part, i.e. in the part of user traffic which is to be transmitted with assured delivery, whereas the frames of user traffic in the second buffer 8 are to be transmitted with non-assured delivery, i.e. the dropping part of those frames in the provider network 4 is less critical for the Quality of Service of that type of user traffic.

The assignment of the frames from the stream 5 of user traffic is made in dependence of a characteristic value of a specific field within each frame, being indicative of a desired quality of service, in particular describing the type of user data which is contained in the frame, e.g. telephone, video or file transfer traffic. In particular, the specific field may be one of the following: IP ToS (type of service) byte, IEEE 802.1 PCP field, or multi-protocol label switching experimental (MPLS EXP) bits.

In the present example, the stream 5 of frames of user data comprises frames containing telephone data and frames containing file transfer data, the former being assigned to the first buffer 7, the latter being assigned to the second buffer 8, as telephone data is sensitive to dropping of frames, leading to a bad voice quality, whereas loss of frames of file transfer data is less critical, as file transfer data can more easily cope with packet loss.

In the device 1, a scheduler **9** is arranged, which scheduler 9 delivers frames from the first buffer 7 to the service provider 3 by emptying the first buffer 7 at a first rate **R1** and also delivers frames from the second buffer 8 to the service provider 3 by emptying the second buffer 8 at a second rate **R2.** The first rate R1 corresponds at most to the committed information rate **CIR** in order to ensure that all of the frames from the first buffer can be transmitted with assured delivery by the service provider 3. The second buffer 8 is emptied at a rate which corresponds at least to the difference between the peak information rate **PIR** and the committed information rate CIR and at most to the peak information rate PIR, provided that sufficient frames are available in the buffers 7,8. In this case, the total rate, i.e. the sum of the first and second rates R1, R2 usually corresponds to the peak information rate PIR for transmitting the frames of user data at the highest possible speed.

The simple traffic- and profile-aware device 1 of Fig. 1 can be further enhanced by including a marking unit (not shown in Fig. 1) which marks the frames of the first buffer 7 as being part of the CIR bandwidth and the frames of the second buffer 8 as being part of the PIR bandwidth. This is especially useful when the service provider 3 is using the so-called color aware policing function defined in the MEF10 specification, i.e. a function that takes into account the marking as assigned by the customer.

A marking unit **10** is also provided in a modified device **1',** shown in **Fig. 2****,** which marks the frames from the first buffer 7 with a first mark **G** (green), indicating to the service provider 3 that these frames are to be transmitted with assured delivery. Although the frames from the second buffer 8 are to be transmitted with non-assured delivery, the marking unit 10 marks only part of the frames from the second buffer 8 with the second mark **Y** (yellow), whereas another part of the frames from the second buffer 8 is marked with the first mark G.

The reason for this is that the scheduler **9'** of Fig. 2 comprises two stages **9a, 9b.** The first stage 9a divides the available CIR bandwidth between the first and second buffers 7, 8, where the second buffer is only serviced if the first buffer 7 is empty. In other words, the first stage 9a of the scheduler 9' tries to use the entire CIR bandwidth by using the frames from the first buffer 7, being emptied at a first rate R1, and, in case that insufficient frames are available in the first buffer 7 for attaining the CIR bandwidth, frames of the second buffer 8 are used to attain the CIR bandwidth. The second stage 9b of the scheduler 9' services the second buffer 8 for the PIR bandwidth.

In the example shown in Fig. 2, the frames from the second buffer 8 are transferred to the service provider 3 with a second rate R2 which is the sum of two contributions, namely of a first part of frames which is provided to the first stage 9a of the scheduler 9' with a first sub-rate **R2.1** and of a second part of frames which is provided to the second stage 9b of the scheduler 9' with a second sub-rate **R2.1,** in case that insufficient frames are present in the first buffer 7, as described above. In this way, the CIR bandwidth can always be used up, provided that sufficient frames are available in both buffers 7, 8.

In either of the two cases shown in Fig. 1 and Fig. 2, respectively, a computer network **11, 11'** is provided which allows to transmit frames of user traffic according to a desired CIR/PIR profile, thus improving Quality of Service for the customer. In the examples given, the provider network 4 is an Ethernet network using the MEF 10 specification; however, the person skilled in the art will appreciate that the mechanism described above can be applied to any technology that can use CIR/PIR traffic profiles, e.g. MPLS, IP etc. In all of these cases, assigning traffic based on traffic type/characteristics into an assured or a non-assured part allows the customer to improve the quality of his applications.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. Method for shaping a stream (5) of frames of user traffic for a service provider (3) transmitting user traffic up to a committed information rate (CIR) with assured delivery and transmitting user traffic exceeding the committed information rate (CIR) up to a peak information rate (PIR) with non-assured delivery,
**characterized by** the steps of:
depending upon a characteristic of each frame, assigning the frames of user traffic either to a first buffer (7) for frames to be transmitted with assured delivery or to a second buffer (8) for frames to be transmitted with non-assured delivery,
delivering the frames of the first buffer (7) to the service provider (3) by emptying the first buffer (7) at a first rate (R1) corresponding at most to the committed information rate (CIR), and
delivering the frames of the second buffer (8) to the service provider (3) by emptying the second buffer (8) at a second rate (R2), the sum of the first and the second rate (R1, R2) corresponding at most to the peak information rate (PIR), preferably being equal to the peak information rate (PIR).

2. Method according to claim 1, wherein frames from the buffers (7, 8) which are to be transmitted with assured delivery are marked with a first sign (G) and frames from the buffers (7, 8) which are to be transmitted with non-assured delivery are marked with a second sign (Y).

3. Method according to claim 2, wherein in case that the first buffer (7) is emptied at a first rate (R1) being lower than the committed information rate (CIR), part of the frames from the second buffer (8) are marked with the first sign (G).

4. Method according to claim 1, wherein the frames are assigned either to the first or to the second buffer (7, 8) in dependence of a characteristic value of a specific field within each frame, the specific field being indicative of a desired quality of service.

5. Device (1, 1') for shaping a stream (5) of frames of user traffic for a service provider (3) transmitting user traffic up to a committed information rate (CIR) with assured delivery and user traffic exceeding the committed information rate (CIR) up to a peak information rate (PIR) with non-assured delivery, the device comprising:
a first buffer (7) for frames to be transmitted with assured delivery,
a second buffer (8) for frames to be transmitted with non-assured delivery,
a selector (6) for assigning frames of user traffic to either the first or the second buffer (7, 8) in dependence of a characteristic of each frame,
and
a scheduler (9, 9') for delivering frames from the first buffer (7) to the service provider (3) by emptying the first buffer (7) at a first rate (R1) corresponding at most to the committed information rate (CIR) and for delivering frames from the second buffer (8) to the service provider (3) by emptying the second buffer (8) at a second rate (R2), the sum of the first and the second rate (R1, R2) corresponding at most to the peak information rate (PIR), preferably being equal to the peak information rate (PIR).

6. Device according to claim 5, further comprising a marking unit (10) for marking the frames from the buffers (7, 8) which are to be transmitted with assured delivery with a first sign (G) and for marking the frames from the buffers (7, 8) which are to be transmitted with non-assured delivery with a second sign (Y).

7. Device according to claim 6, wherein the marking unit (10) marks part of the frames from the second buffer (8) with the first sign (G) in case that the first buffer (7) is emptied at a first rate (R1) being lower than the committed information rate (CIR).

8. Device according to claim 5, wherein the selector (9, 9') assigns the frames either to the first or to the second buffer (7, 8) in dependence of a characteristic value of a specific field within each frame, the specific field being indicative of a desired quality of service.

9. Computer network (11, 11') comprising at least one device (1, 1') according to claim 5, preferably being arranged at a demarcation point between a customer equipment (2) and a provider network (4).

10. Computer network according to claim 9, wherein the provider network (4) is construed to transmit traffic with the first mark (G) with assured delivery and to transmit traffic with the second mark (Y) with non-assured delivery.
